(19) **Europäisches Patentamt**
**European Patent Office**
**Office européen des brevets**

(11) **EP 2 415 018 B1**

(12) **EUROPEAN PATENT SPECIFICATION**

(45) Date of publication and mention
of the grant of the patent:
**25.10.2017 Bulletin 2017/43**

(51) Int Cl.:
**G06T 7/00** (2017.01)

(21) Application number: **10715355.3**

(86) International application number:
**PCT/IB2010/050897**

(22) Date of filing: **02.03.2010**

(87) International publication number:
**WO 2010/113051 (07.10.2010 Gazette 2010/40)**

(54) **SYSTEM AND METHOD FOR INTERACTIVE LIVE-MESH SEGMENTATION**

SYSTEM UND VERFAHREN FÜR INTERAKTIVE LIVE-MESH-SEGMENTIERUNG

SYSTÈME ET PROCÉDÉ DE SEGMENTATION INTERACTIVE D'UN MAILLAGE VIVANT

(84) Designated Contracting States:
**AT BE BG CH CY CZ DE DK EE ES FI FR GB GR HR HU IE IS IT LI LT LU LV MC MK MT NL NO PL PT RO SE SI SK SM TR**

(30) Priority: **03.04.2009 US 166263 P**

(43) Date of publication of application:
**08.02.2012 Bulletin 2012/06**

(73) Proprietors:
• **Koninklijke Philips N.V.**
**5656 AE Eindhoven (NL)**
Designated Contracting States:
**AT BE BG CH CY CZ DK EE ES FI FR GB GR HR HU IE IS IT LI LT LU LV MC MK MT NL NO PL PT RO SE SI SK SM TR**
• **Philips Intellectual Property & Standards GmbH**
**20099 Hamburg (DE)**
Designated Contracting States:
**DE**

(72) Inventors:
• **VIK, Torbjoern**
**NL-5656 AE Eindhoven (NL)**
• **SCHULZ, Heinrich**
**NL-5656 AE Eindhoven (NL)**

(74) Representative: **van Velzen, Maaike Mathilde**
**Philips Intellectual Property & Standards**
**High Tech Campus 5**
**5656 AE Eindhoven (NL)**

(56) References cited:
**WO-A1-2005/038711     WO-A1-2005/078666**
**WO-A1-2007/034424**

• **YOO-JOO CHOI, MIN HONG, MIN-HYUNG CHOI, MYOUNG-HEE KIM: "ADAPTIVE SURFACE-DEFORMABLE MODEL WITH SHAPE-PRESERING SPRING" COMPUTER ANIMATION AND VIRTUAL WORLDS, vol. 16, 10 June 2005 (2005-06-10), pages 69-83, XP002587763**
• **TERZOPOULOS D ET AL: "Sampling and reconstruction with adaptive meshes" PROCEEDINGS OF THE COMPUTER SOCIETY CONFERENCE ON COMPUTER VISION AND PATTERN RECOGNITION. LAHAINA, MAUI, HAWAII, JUNE 3 - 6, 1991; [PROCEEDINGS OF THE COMPUTER SOCIETY CONFERENCE ON COMPUTER VISION AND PATTERN RECOGNITION], LOS ALAMITOS, IEEE. COMP., vol. -, 3 June 1991 (1991-06-03), pages 70-75, XP010023189 ISBN: 978-0-8186-2148-2**
• **ALLAN J B ET AL: "A METHODOLOGY FOR DIRECT MANIPULATION OF POLYGON MESHES" NEW ADVANCES IN COMPUTER GRAPHICS. PROCEEDINGS OF CGINTERNATIONAL, XX, XX, 27 June 1989 (1989-06-27), pages 451-469, XP008044110**
• **IGWE P C ET AL: "Modeling Deformable Objects for Computer-Aided Sculpting (CAS)Modeling Deformable Objects for Computer-Aided Sculpting (CAS)" GEOMETRIC MODELING AND IMAGING--NEW TRENDS, 2006 LONDON, ENGLAND 05-06 JULY 2006, PISCATAWAY, NJ, USA,IEEE LNKD- DOI:10.1109/GMAI.2006.36, 5 July 2006 (2006-07-05), pages 3-8, XP010927254 ISBN: 978-0-7695-2604-1**

- M. TESCHNER, S. GIROD, AND B. GIROD: "Direct computationof nonlinear soft-tissue deformation" PROC. VISION,MODELING, VISUALIZATION VMV'00, 22 November 2000 (2000-11-22), pages 383-390, XP002587764
- SYAIFUL NIZAM YAHYA ET AL: "Solid deformation modeling techniques" COMPUTING&INFORMATICS, 2006. ICOCI '06. INTERNATIONAL CONFERENCE ON, IEEE, PISCATAWAY, NJ, USA, 6 June 2006 (2006-06-06), pages 1-14, XP031539356 ISBN: 978-1-4244-0219-9
- URBAN ET AL: "Physical simulation of deformable objects with applications in radiotherapy", THESIS,, 1 January 2007 (2007-01-01), pages 1-81, XP009191799,

**Description**

**Background**

Segmentation is the process of extracting anatomic configurations from images. Many applications in medicine require segmentation of standard anatomy in volumetric images acquired through CT, MRI and other forms of medical imaging. Clinicians, or other professionals, often use segmentation for treatment planning. Segmentation can be performed manually, wherein the clinician examines individual image slices and manually draws two-dimensional contours of a relevant organ in each slice. The hand-drawn contours are then combined to produce a three-dimensional representation of the relevant organ. Alternatively, the clinician may use an automatic segmentation algorithm that examines the image slices and determines the two-dimensional contours of a relevant organ without clinician involvement.

Segmentation using hand-drawn contours of image slices, however, is time-consuming and typically accurate only up to approximately two to three millimeters. When drawing hand-drawn contours, clinicians often need to examine a large number of images. Moreover, the hand-drawn contours may differ from clinician to clinician. In addition, automatic algorithms are often not reliable enough to solve all standard segmentation tasks. Making modifications to results obtained by automatic algorithms may be difficult and counterintuitive.

The result of many automatic segmentation algorithms is a three-dimensional surface represented as a mesh composed of a number of triangles. In order to perform modifications to the result it is therefore necessary to have intuitive mesh interaction tools. Some approaches to mesh interaction such as, for example, explicit displacement of vertices, often result in meshes that have ragged surfaces or large triangles/polygons in certain regions. Furthermore, since it is preferable to do modifications in a two-dimensional reformatted slice view of the image, undesirable changes in the image often occur distant from the reformatted plane.

WO2005/078666 A1 discloses an image processing system comprising 3D processing means of automatic segmentation of an object using a 3-D deformable Surface Model, further comprising means of real-time interactive adaptation of the Surface Model including user-controlled means of selection of a 2D Data Plane (DP) that intersects the 3-D Surface Model along a 2-D Model Curve (MC); user-actuated means for actuating a Click Point (CP) in said 2-D Data Plane and real-time calculation means for yielding a 3D Correction Surface (G) attached to said Click Point; attract-to-points processing means for pulling the points of the 3D Surface Model, in a 3D neighborhood of a 2D portion of the Model Curve to be modified, towards the 3D Correction Surface; and visualization means for visualizing user-controlled actions. The user may slide the Click Point in the Data Plane, whereby the 3D Surface Model looks like attracted to the Click Point and the Correction Surface. Optionally, the user may modify the shape of the attached 3D Correction Surface, while sliding the Click Point.

YOO-JOO CHOI, MIN HONG, MIN-HYUNG CHOI, MYOUNG-HEE KIM: "ADAPTIVE SURFACE-DEFORMABLE MODEL WITH SHAPE-PRESERING SPRING" COMPUTER ANIMATION AND VIRTUAL WORD, vol 16, pages 69-83 discloses a multi-resolutional surface deformable model with physical property adjustment scheme and shape-preserving springs to represent surface-deformable objects efficiently and robustly.

**Summary of the Invention**

A method for segmenting an anatomical structure. The method including initiating a segmentation algorithm, which produces a surface mesh of the anatomical structure from a volumetric image, the surface mesh formed of a plurality of polygons including vertices and edges; assigning a spring to each of the edges and a mass point to each of the vertices of the surface mesh; displaying a 2D reformatted view including a 2D view of the surface mesh and the anatomical structure; selecting by a user a point on the surface mesh, adding pull springs to vertices of the surface mesh either by a) by forming a volumetric mesh directly within the surface mesh, the volumetric mesh including vertices and edges corresponding to the vertices and edges of the surface mesh; adding a pull springs between a vertex of the surface mesh and a corresponding vertex of the volumetric mesh based upon the distance of the vertex from the selected point; or b) drawing a 2D contour of the anatomical structure by a suer, the 2D contour including a plurality of points connected to one another; adding a pull string from a point of the 2D contour to a vertex of the surface mesh closest to the point of the 2D contour; moving a portion of the surface mesh via moving by a user the selected point to a desired location, wherein the distance by which each vertex within said portion will move is determined by a distance of the vertex from the selected point.

A system for segmenting an anatomical structure, comprising a processor initiating a segmentation algorithm, which produces a surface mesh of the anatomical structure from a volumetric image, the surface mesh formed of a plurality of polygons including vertices and edges, further assigning a spring to each of the edges and a mass point to each of the vertices of the surface mesh; a display displaying a 2D reformatted view including a 2D view of the surface mesh and the anatomical structure; and a user interface adapted to allow a user to select a point on the surface mesh, and add pull springs to vertices of the surface mesh either by a) forming a volumetric mesh directly within the surface mesh by the processor, the volumetric mesh including vertices and edges corresponding to the vertices and edges of the surface mesh; and adding a pull spring between a vertex of the surface mesh and a corresponding vertex of the volumetric mesh based upon the distance of the vertex from the selected point; or b) allowing the user to draw a 2D contour of the anatomical structure, the 2D contour including a plurality of points connected to one another; and adding a pull string from a point of the 2D contour to a vertex of the surface mesh closest to the point of the 2D contour; wherein the processor is further arranged for moving a portion of the surface mesh via moving by a user the selected point to a desired location through the user interface, wherein the distance by which each vertex within said portion will move is determined by a distance of the vertex from the selected point.

## Brief Description of the Drawings

Fig. 1 shows a schematic view of a system according to an exemplary embodiment.

Fig. 2 shows a flow chart of a method according to an exemplary embodiment.

Fig. 3 shows a flow chart of a method according to an alternate embodiment.

Fig. 4 shows a flow chart of a method according to another example.

Fig. 5 shows a perspective view of a portion of a surface mesh according to an exemplary embodiment.

## Detailed Description

The exemplary embodiments set forth herein may be further understood with reference to the following description and the appended drawings, wherein like elements are referred to with the same reference numerals. The exemplary embodiments relate to a system and method for segmentation of a standard anatomy in volumetric images acquired through CT, MRI, etc. In particular, the exemplary embodiments describe a method for performing modifications to an approximate segmentation in a two-dimensional (2D) reformatted view, in an intuitive manner. It will be understood by those of skill in the art that although the exemplary embodiments describe a segmentation of an organ, the following systems and methods may be used to segment any three-dimensional (3D) anatomical structure from the volumetric images.

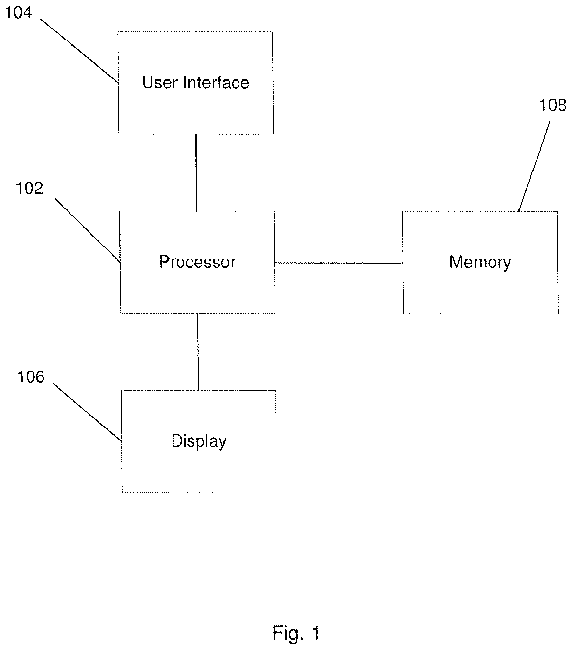

According to one exemplary embodiment in Fig. 1, a system 100 is capable of making modifications to an initial segmentation of an organ or other anatomical structure. The system 100 comprises a processor 102 that is capable of processing a segmentation algorithm on a series of volumetric images (e.g., acquired through MRI, CT) to complete an initial segmentation. The segmentation algorithm operates either automatically (without user involvement) or semi-automatically to complete the initial segmentation. In automatic operation, the segmentation algorithm analyzes the image slices and determines the two-dimensional contours of a relevant organ in an image slice without user involvement to complete the initial segmentation. In semi-automatic operation, the user may select a contour or image detail and the algorithm may then complete the initial segmentation based on this selection. The initial segmentation is represented by a surface mesh. The processor 102 is further capable of interpreting a user input via a user interface 104 of the system 100. The system 100 further comprises a display 106 for displaying the surface mesh representation and a memory 108 for storing at least one of the segmentation algorithm, the volumetric images, and the initial surface mesh representation. The memory 108 is any known type of computer-readable storage medium. It will be understood by those of skill in the art that the system 100 is a personal computer, a server, or any other processing arrangement.

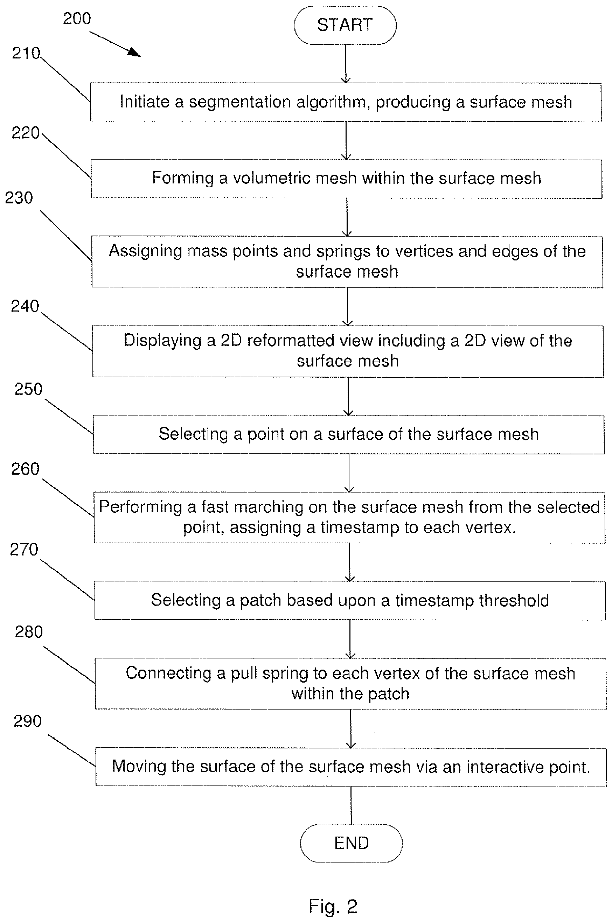

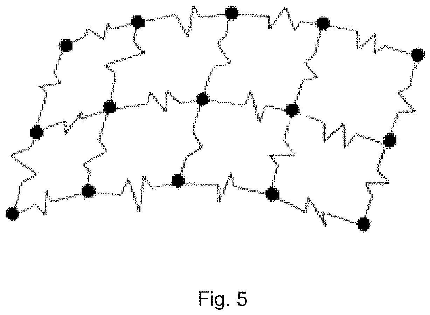

As shown in Fig. 2, method 200 comprises initiating a segmentation algorithm, in a step 210, to complete the initial segmentation of an imaged organ, or other anatomic structure, in the series of volumetric images. The initial segmentation is represented by a surface mesh that is comprised of triangular polygons formed of vertices and edges. For example, Fig. 5 shows an example of a portion of a surface mesh comprising vertices and edges. It will be understood by those of skill in the art that the surface mesh acts as a model or mean organ that may be interactively modified via the user interface 104. In a step 220, the processor 102 further creates a volumetric mesh, which is contained within the surface mesh such that vertices and edges of the volumetric mesh are within the vertices and edges of the surface mesh formed by the segmentation algorithm. The volumetric mesh includes vertices and edges corresponding to each of the vertices and edges of the surface mesh.

In a step 230, the processor 102 assigns vertices and edges of the surface mesh with mass points and springs, respectively. Each edge of the surface mesh corresponds to a spring while each vertex of the surface mesh corresponds to a mass point. The rest length of each spring may be substantially equal to a length of the corresponding edge of the surface mesh. In a simple version, each mass point has unit mass and each spring has the same spring constant. However, it will be understood by those of skill in the art that the mass and spring constant may vary according to prior knowledge about the organ or other anatomic structure that the surface mesh represents. For example, some parts of the organ or structure may be stiffer or more rigid than other parts. Further, image forces may be added by weighting mass points of vertices based upon an image gradient, which represents an object boundary such that high mass points will be assigned for vertices where the image gradient is high, preventing unnecessary movement where the vertex corresponds to the surface of the imaged organ. In a step 240, a 2D reformatted view is displayed on the display 106. The 2D reformatted view includes a 2D view of the surface mesh along with the imaged organ. It will be understood by those of skill in the art that the 2D reformatted view is an image from the series of volumetric images that has been reformatted to show the 2D image of both the surface mesh and the imaged organ. It will also be understood by those of skill in the art that the surface mesh is displayed in a position, which corresponds to a position of the imaged organ in the displayed image.

Once the surface mesh has been appropriately assigned with the mass points and springs, pull springs are added to the surface mesh to interactively modify the surface mesh. In a step 250, a point on a surface of the surface mesh is selected. The point on the surface of the surface mesh is selected by a user via the user interface 104. For example, the user interface 104 includes a mouse, which may be used to point to and click on a point on the surface mesh. Alternatively, the user interface 104 may include a touch interface such that the point may be selected by touching a point on the surface of the surface mesh on the display 106. The user selects a point either at random or according to a portion of the surface that the user desires to correct or modify. The selected point will be the point of interaction.

In an alternative embodiment, the selected point may be a feature point on the surface of the surface mesh, which may be identified by the processor 102 or by the user via the user interface 104. It will be understood by those of skill in the art that identifying feature points allows image forces to be added to the surface mesh. For example, the processor 102 may identify feature points that show typical characteristics of a point (e.g., corner feature) or contour (e.g., gradient feature) such that placing a mouse pointer in the vicinity of the feature point will result in the pointer "snapping" to the feature point and thereby selecting the feature point. It will be understood by those of skill in the art that the user may select more than one point on the surface of the surface mesh. It will also be understood by those of skill in the art that the selected points may also be set (e.g., according to feature points) such that they are changeable by the user.

In a step 260, the processor performs a fast-marching method on the surface mesh, starting from the point selected by the user. Those of skill in the art will understand that a fast marching method is a method of boundary value formulation. The fast-marching method assigns a timestamp to each of the vertices on the surface mesh, the timestamp for each vertex being determined by a distance of the vertex from the selected point. Thus, vertices farther away from the selected point are assigned a higher timestamp, while vertices closer to the selected point are assigned a lower timestamp. The fast-marching method may also take local orientation of the surface polygons (e.g., triangles) of the surface mesh into consideration. For example, differences in surface normals may incur a higher time cost. Once the fast-marching method has been performed, a patch of the surface mesh is selected based upon a time threshold, in a step 270. For example, the selected patch includes all polygons reached within a certain amount of time. It will be understood by those of skill in the art that the time threshold may be predetermined by the user prior to use. Thus, the processor 102 may automatically select the patch according to the predetermined threshold. It will also be understood by those of skill in the art, however, that the patch may be selected by the user based upon a threshold determined by the user during use.

In a step 280, a pull spring is attached to each of the vertices in the patch. The pull spring is attached to each vertex such that a first end of the pull spring is attached to the vertex of the surface mesh while a second end of the pull spring is attached to the corresponding vertex of the volumetric mesh. Each pull spring will have a rest length of zero. A spring constant of each pull spring is weighted according to the corresponding timestamp of the corresponding vertex. For example, pull springs may be down-weighted with respect to closer pull springs. Alternatively, vertices with higher timestamps may be accorded higher masses or may be fixed such that the vertices may not move. It will be understood by those of skill in the art that higher masses or fixing the vertices so that the vertices are unable to move prevents non-intuitive changes to the surface mesh, which are far from the selected point of interaction. It will also be understood by those of skill in the art that the step 270 is not required. Where a patch is not selected, a pull spring is simply attached from the selected point to a vertex closest to a vertex of the surface mesh closest to the selected point.

In a step 290, the user interactively moves the surface of the surface mesh via an interactive point. The interactive point may be the point selected in step 250. The interactive point may also be a feature point that shows typical characteristics of a point (e.g., corner feature) or contour (e.g., gradient feature). The interactive point is moved to a desired location. The desired location may be a corresponding point on a surface of the imaged organ in the 2D reformatted view. It will be understood by those of skill in the art that where the interactive point is close to a feature point, the feature point may be removed to permit movement of the interactive point. During interaction, a numerical solver continuously solves a Netwonian equation for each vertex of the surface mesh such that moving the selected point moves the surface of the surface mesh via the pull springs attached to each of the vertices. Since each pull spring may be assigned a different spring constant based on the timestamp, it will be understood by those of skill in the art that each vertex may move varying distances such that the surface of the surface mesh moves in an intuitive manner. The distance that each of the vertices will be moved is calculated using the Newtonian equation, F = ma, where a = d (dx/dt), F being the force acting on the vertex, m being the mass of the vertex and x being the position of the vertex. Thus, it will be understood by those of skill in the art that the distance moved by each of the vertices is determined based upon a distance from the selected point (i.e., the point of interaction). The processor 102 uses any standard solver such as, for example, Euler Runge-Kutta, which is preloaded into the memory 108 of the system 100, or is otherwise made available for use. It will be understood by those of skill in the art that the steps 250 - 290 may be repeated until the surface mesh has been modified as desired.

In an alternative embodiment, the point of interaction of step 290 is selected based on the form of the surface mesh. For example, where the surface mesh is jagged, a jagged corner of the surface mesh is selected and a distance map of ends of the corner is determined and subtracted to reduce the jagged edge. In a further embodiment, the interactive point of the step 290 is a steerable ball or point that is moved by the user via the user interface 104. The steerable ball may be either two dimensional or three dimensional, creating an attraction/repulsion field such that any of the vertices that fall within the sphere of the streerable ball is attracted or repelled to move the vertex in line with a motion of the steerable ball. For example, force of attraction/repulsion are determined by using the formula:

$$\mathbf{f}_{att}(\mathbf{x}) = \begin{cases} \dfrac{\varepsilon}{|\mathbf{r}|^2} \cdot \dfrac{\mathbf{r}}{|\mathbf{r}|} & \text{if} |\mathbf{r}| \leq r_{max}, \\ 0 & \text{otherwise} \end{cases}$$

where x is a position of the steerable ball, $r_{max}$ is a radius of the steerable ball, $\varepsilon = \forall$ 1 and r = x - c, where c is a center of the steerable ball.

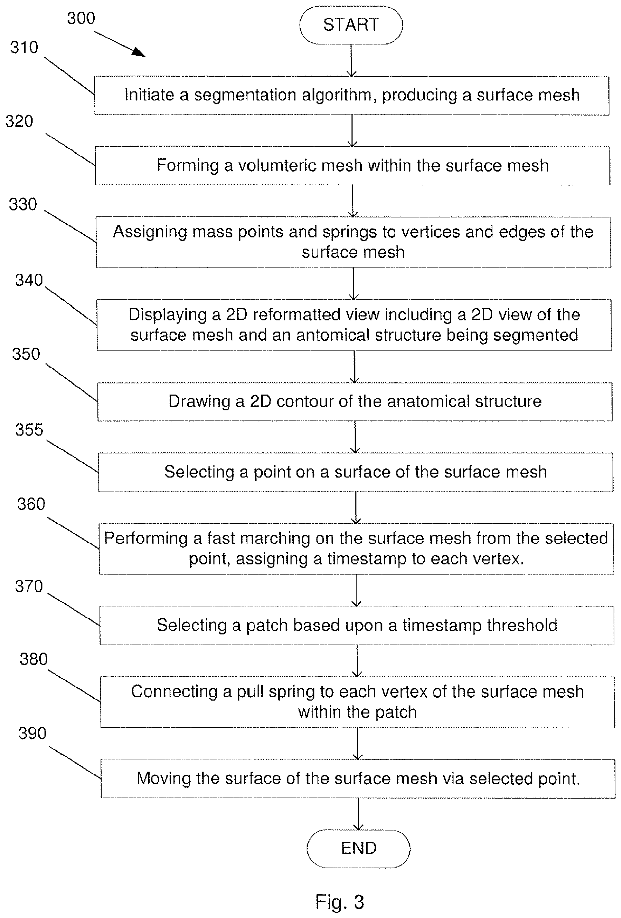

Fig. 3 shows a method 300, which is substantially similar to the method 200, described above. The method 300 differs in user selection of interaction points. Steps 310 - 340 are substantially similar to steps 210 - 240 of the method 200. The method 300 comprises initiating a segmentation algorithm, in the step 310, which completes an initial segmentation, as similarly described instep 210 of method 200. This initial segmentation produces a surface mesh comprised of vertices and edges. In the step 320, a volumetric mesh is formed, within the surface mesh of the initial segmentation. In the step 330, the processor 102 assigns each of the vertices of the surface mesh a mass point and each of the edges a spring. In the step 340, the display 106 displays a 2D reformatted view of a 2D view of the surface mesh along with the 2D view of the imaged organ such that the user may determine modifications to be made on the surface mesh.

In a step 350, the user draws a 2D contour of the imaged organ. The 2D contour may be drawn using a drawing tool such as, for example, Livewire, which allows the user to draw a contour based upon points selected on a surface of the imaged organ. Livewire is used by the user to draw connecting lines between each of the points to draw in the surface of the imaged organ. It will be understood by those of skill in the art that the greater a number of points on the surface of the imaged organ that are selected, the more accurate the 2D contour of the imaged organ will be. Thus, it will be understood by those of skill in the art that the user may select any number of points on the surface of the imaged organ, as desired.

The points of the 2D contour are then connected to points on a surface of the surface mesh, in a step 355. For each of the points of the 2D contour, the user selects a point on the surface of the surface mesh to which the 2D contour should be connected. In a step 360, for each of the selected points on the surface of the surface mesh, the processor 102 performs a fast-marching method, similar to the step 260, assigning timestamps to each of the vertices of the surface mesh. Steps 360 - 390 are substantially similar to steps 260 - 290, as described above in regard to method 200. Thus, in the step 370, a patch is selected based upon a time threshold and in the step 380, pull springs are attached to each of the vertices in the selected patch. It will be understood by those of skill in the art that the step 370 is not required. Where a patch is not selected, a pull spring may be added from a point of the 2D contour to a vertex of the surface mesh closest to the point of the 2D contour, in the step 380. In the step 390, the processor 102 calculates the Newtonian equation for each of the vertices with the pull spring attached thereto, to determine a distance by which the vertex will move when the selected point on the surface of the surface mesh is connected to the points on the 2D contour. It will be understood by those of skill in the art that the steps 360 - 390 may be repeated for each of the points on the surface of the surface mesh that are selected by the user to be connected to points on the 2D contour.

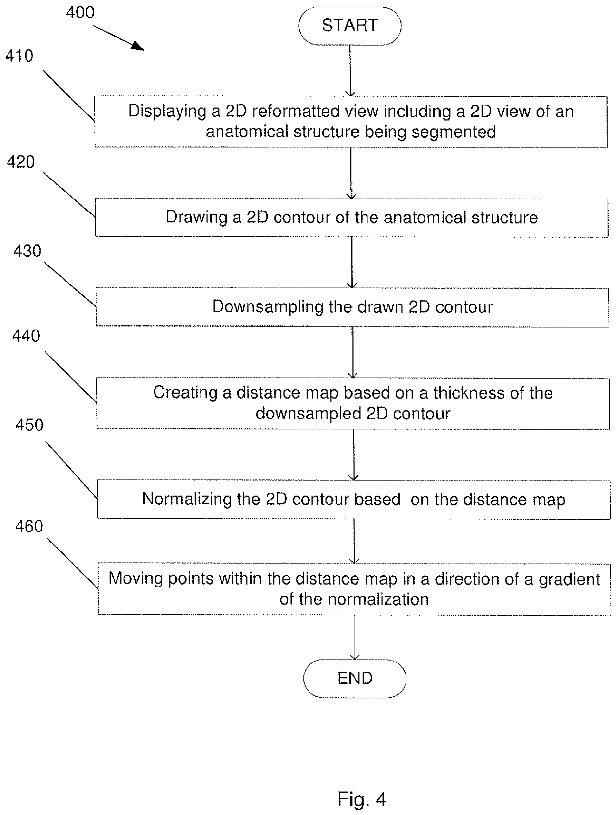

In another example, as shown in Fig. 4, a method 400 comprises displaying a 2D reformatted view of an imaged organ or other anatomic structure on the display 106, in a step 410. In a step 420,the user draws a 2D contour of the imaged organ. The 2D contour is for example drawn using a drawing tool such as, for example, Livewire, which allows the user to draw a contour based upon points selected on a surface of the imaged organ. Livewire is used by the user to draw connecting lines between each of the points to draw in the surface of the imaged organ. It will be understood by those of skill in the art that the greater a number of points on the surface of the imaged organ that are selected, the more accurate the 2D contour of the imaged organ will be. Thus, it will be understood by those of skill in the art that the user may select any number of points on the surface of the imaged organ, as desired.

Alternatively, a Deriche filter is used for 3D edge and feature detection such that structures in the image are delineated and a 2D contour is determined by the processor 102. The Deriche filter recognizes feature values, which are then interpolated during a feature search such that outlines of structures are made clearly visible.

In a step 430, the processor 102 downsamples the drawn 2D contour by, for example, reducing a resolution of the 2D contour such that edges are blurred. It will be understood by those of skill in the art that downsampling of the 2D contour reduces any sharp edges of the 2D contour while increasing a thickness of the drawn 2D contour. The processor 102 then creates a distance map of the thickness of the downsampled 2D contour, in a step 440, measuring a distance between outer and inner edges of the downsampled 2D contour. In a step 450, the distance map is used to normalize the downsampled 2D contour using, for example, a Gaussian distribution, such that points of the 2D contour within the distance map are pulled in the direction of a gradient of normalization in a step 460. Moving the points within the distance map creates a smooth surface of the 2D contour, closer to a surface of the imaged structure. It will be understood by those of skill in the art that the steps 420 - 460 may be repeated as necessary, until the 2D contour, is sufficiently close to the surface of the imaged organ.

It is noted that the exemplary embodiments or portions of the exemplary embodiments may be implemented as a set of instructions stored on a computer readable storage medium, the set of instructions being executable by a processor.

It will be apparent to those skilled in the art that various modifications and variations can be made in the structure and methodology described herein. Thus, it is intended that the present disclosure cover any modifications and variations provided that they come within the scope of the appended claims.

It is also noted that the claims may include reference signs/numerals. However, the present claims should not be considered to be limited to the exemplary embodiments corresponding to the reference signs/numerals.

**Claims**

1. A method for segmenting an anatomical structure, comprising:

    initiating (210, 310) a segmentation algorithm, which produces a surface mesh of the anatomical structure from a volumetric image, the surface mesh formed of a plurality of polygons including vertices and edges;
    assigning (230, 330) a spring to each of the edges and a mass point to each of the vertices of the surface mesh;
    displaying (240, 340) a 2D reformatted view including a 2D view of the surface mesh and the anatomical structure;
    selecting by a user (250, 355) a point on the surface mesh,
    adding (280, 380) pull springs to vertices of the surface mesh either by

        a) forming (220, 320) a volumetric mesh directly within the surface mesh, the volumetric mesh including vertices and edges corresponding to the vertices and edges of the surface mesh; adding a pull spring between a vertex of the surface mesh and a corresponding vertex of the volumetric mesh based upon the distance of the vertex from the selected point;
        or
        b) drawing (350) a 2D contour of the anatomical structure by a user, the 2D contour including a plurality of points connected to one another; adding a pull string from a point of the 2D contour to a vertex of the surface mesh closest to the point of the 2D contour;

    moving (290, 390) a portion of the surface mesh via moving by a user the selected point to a desired location, wherein the distance by which each vertex within said portion will move is determined by a distance of the vertex from the selected point.

2. The method of claim 1, when adding (280, 380) pull springs to vertices of the surface mesh by step a), further comprising:

    performing (260, 360) a fast marching method from the selected point, the fast marching assigning a timestamp to each of the vertices of the surface mesh, the timestamp based upon a distance from the selected point.

**3.** The method of claim 2, when adding (280, 380) pull springs to vertices of the surface mesh by step a), further comprising:

selecting (270, 370) a patch of polygons based upon a threshold of timestamp values.

**4.** The method of claim 3, when adding (280, 380) pull springs to vertices of the surface mesh by step a), a pull spring is added to each of the vertices of the patch and a first end of the pull spring is attached to the vertex of the surface mesh and a second end is attached to a corresponding vertex of the volumetric mesh.

**5.** The method of claim 4, wherein a spring constant of the pull spring is weighted based upon the corresponding timestamp value.

**6.** The method of claim 2, wherein the mass point of each of the vertices is weighted based upon the corresponding timestamp value or an image gradient.

**7.** A system for segmenting an anatomical structure, comprising:

a processor (102) initiating a segmentation algorithm, which produces a surface mesh of the anatomical structure from a volumetric image, the surface mesh formed of a plurality of polygons including vertices and edges, further assigning a spring to each of the edges and a mass point to each of the vertices of the surface mesh;
a display (106) displaying a 2D reformatted view including a 2D view of the surface mesh and the anatomical structure; and
a user interface (104) adapted to allow a user to select a point on the surface mesh, and add pull springs to vertices of the surface mesh either by

a) forming (220, 320) a volumetric mesh directly within the surface mesh by the processor (102), the volumetric mesh including vertices and edges corresponding to the vertices and edges of the surface mesh; and adding a pull spring between a vertex of the surface mesh and a corresponding vertex of the volumetric mesh based upon the distance of the vertex from the selected point;
or
b) allowing the user to draw (350) a 2D contour of the anatomical structure, the 2D contour including a plurality of points connected to one another; and adding a pull string from a point of the 2D contour to a vertex of the surface mesh closest to the point of the 2D contour;

wherein the processor (102) is further arranged for moving a portion of the surface mesh via moving by a user the selected point to a desired location through the user interface (104), wherein the distance by which each vertex within said portion will move is determined by a distance of the vertex from the selected point.

**8.** The system of claim 7, when the user interface being adapted to add pull springs to vertices of the surface mesh based upon the selected point is performed by step a), the processor (102) performs a fast marching from the selected point, the fast marching assigning a timestamp to each of the vertices of the surface mesh, the timestamp based upon a distance from the selected point.

**9.** The system of claim 8, when the user interface being adapted to add pull springs to vertices of the surface mesh based upon the selected point is performed by step a), the user interface (104) is adapted to allow a user to select a patch of polygons based upon a threshold of timestamp values and the processor (102) adds a pull spring to each of the vertices within the patch.

**Patentansprüche**

**1.** Verfahren zur Segmentierung einer anatomischen Struktur, wonach:

ein Segmentierungsalgorithmus initiiert wird (210, 310), der ein Oberflächen-Mesh der anatomischen Struktur aus einem volumetrischen Bild erzeugt, wobei das aus einer Vielzahl von Polygonen gebildete Oberflächen-Mesh Eckpunkte und Ränder umfasst;
jedem der Ränder eine Feder und jedem der Eckpunkte des Oberflächen-Mesh ein Massepunkt zugewiesen wird (230, 330);

eine reformatierte 2D-Ansicht mit einer 2D-Ansicht des Oberflächen-Mesh und der anatomischen Struktur dargestellt wird (240, 340);
von einem Benutzer ein Punkt auf dem Oberflächen-Mesh ausgewählt wird (250, 355),
Zugfedern zu Eckpunkten des Oberflächen-Mesh hinzugefügt werden (280, 380), indem entweder

a) ein volumetrisches Mesh unmittelbar innerhalb des Oberflächen-Mesh gebildet wird (220, 320), wobei das volumetrische Mesh Eckpunkte und Ränder entsprechend den Eckpunkten und Rändern des Oberflächen-Mesh umfasst; eine Zugfeder zwischen einem Eckpunkt des Oberflächen-Mesh und einem entsprechenden Eckpunkt des volumetrischen Mesh, basierend auf dem Abstand des Eckpunkts von dem ausgewählten Punkt, hinzugefügt wird;
oder
b) eine 2D-Kontur der anatomischen Struktur von einem Benutzer gezogen wird (350), wobei die 2D-Kontur eine Vielzahl von miteinander verbundenen Punkten umfasst; eine Zugfeder von einem Punkt der 2D-Kontur zu einem Eckpunkt des Oberflächen-Mesh, der dem Punkt der 2D-Kontur am nächsten ist, hinzugefügt wird;

ein Abschnitt des Oberflächen-Mesh bewegt wird (290, 390), indem ein Benutzer den ausgewählten Punkt in eine gewünschte Position bewegt, wobei der Abstand, um den sich jeder Eckpunkt innerhalb des Abschnitts verschiebt, durch einen Abstand des Eckpunkts von dem ausgewählten Punkt ermittelt wird.

2. Verfahren nach Anspruch 1, wonach bei Hinzufügen (280, 380) von Zugfedern zu Eckpunkten des Oberflächen-Mesh durch Schritt a) weiterhin:

ein Fast-Marching-Verfahren von dem ausgewählten Punkt aus durchgeführt wird (260, 360), wobei das Fast-Marching-Verfahren jedem der Eckpunkte des Oberflächen-Mesh einen Zeitstempel zuweist, wobei der Zeitstempel auf einem Abstand von dem ausgewählten Punkt basiert.

3. Verfahren nach Anspruch 2, wonach bei Hinzufügen (280, 380) von Zugfedern zu Eckpunkten des Oberflächen-Mesh durch Schritt a) weiterhin:

ein Polygon-Patch, basierend auf einem Schwellenwert von Zeitstempelwerten, ausgewählt wird (270, 370).

4. Verfahren nach Anspruch 3, wonach bei Hinzufügen (280, 380) von Zugfedern zu Eckpunkten des Oberflächen-Mesh durch Schritt a) weiterhin:

eine Zugfeder zu jedem der Eckpunkte des Patch hinzugefügt wird und ein erstes Ende der Zugfeder an dem Eckpunkt des Oberflächen-Mesh angebracht wird und ein zweites Ende an einem entsprechenden Eckpunkt des volumetrischen Mesh angebracht wird.

5. Verfahren nach Anspruch 4, wobei eine Federkonstante der Zugfeder, basierend auf dem entsprechenden Zeitstempelwert, gewichtet wird.

6. Verfahren nach Anspruch 2, wobei der Massepunkt jedes der Eckpunkte, basierend auf dem entsprechenden Zeitstempelwert oder einem Bildgradienten, gewichtet wird.

7. System zur Segmentierung einer anatomischen Struktur, umfassend:

einen Prozessor (102), der einen Segmentierungsalgorithmus initiiert, der ein Oberflächen-Mesh der anatomischen Struktur aus einem volumetrischen Bild erzeugt, wobei das aus einer Vielzahl von Polygonen gebildete Oberflächen-Mesh Eckpunkte und Ränder umfasst, weiterhin jedem der Ränder eine Feder und jedem der Eckpunkte des Oberflächen-Mesh einen Massepunkt zuweist;
ein Display (106) zur Darstellung einer reformatierten 2D-Ansicht mit einer 2D-Ansicht des Oberflächen-Mesh und der anatomischen Struktur; sowie
eine Benutzeroberfläche (104), die so eingerichtet ist, dass sie es einem Benutzer ermöglicht, einen Punkt auf dem Oberflächen-Mesh auszuwählen und Zugfedern zu Eckpunkten des Oberflächen-Mesh hinzuzufügen, indem entweder

a) durch den Prozessor (102) ein volumetrisches Mesh unmittelbar innerhalb des Oberflächen-Mesh gebildet wird (220, 320), wobei das volumetrische Mesh Eckpunkte und Ränder entsprechend den Eckpunkten und Rändern des Oberflächen-Mesh umfasst; und eine Zugfeder zwischen einem Eckpunkt des Oberflächen-Mesh und einem entsprechenden Eckpunkt des volumetrischen Mesh, basierend auf dem Abstand des Eckpunkts von dem ausgewählten Punkt, hinzugefügt wird;

oder

b) es dem Benutzer ermöglicht wird, eine 2D-Kontur der anatomischen Struktur zu ziehen (350), wobei die 2D-Kontur eine Vielzahl von miteinander verbundenen Punkten umfasst, und eine Zugfeder von einem Punkt der 2D-Kontur zu einem Eckpunkt des Oberflächen-Mesh, der dem Punkt der 2D-Kontur am nächsten ist, hinzuzufügen;

wobei der Prozessor (102) weiterhin so eingerichtet ist, dass er einen Abschnitt des Oberflächen-Mesh bewegt, indem ein Benutzer den ausgewählten Punkt mittels der Benutzeroberfläche (104) in eine gewünschte Position bewegt, wobei der Abstand, um den sich jeder Eckpunkt innerhalb des Abschnitts verschiebt, durch einen Abstand des Eckpunkts von dem ausgewählten Punkt ermittelt wird.

8. System nach Anspruch 7, wobei, wenn mit Hilfe der Benutzeroberfläche Zugfedern zu Eckpunkten des Oberflächen-Mesh, basierend auf dem ausgewählten Punkt, durch Schritt a) hinzugefügt werden, der Prozessor (102) ein Fast-Marching-Verfahren von dem ausgewählten Punkt aus durchführt, wobei das Fast-Marching-Verfahren jedem der Eckpunkte des Oberflächen-Mesh einen Zeitstempel zuweist, wobei der Zeitstempel auf einem Abstand von dem ausgewählten Punkt basiert.

9. System nach Anspruch 8, wobei, wenn mit Hilfe der Benutzeroberfläche Zugfedern zu Eckpunkten des Oberflächen-Mesh, basierend auf dem ausgewählten Punkt, durch Schritt a) hinzugefügt werden, die Benutzeroberfläche (104) so eingerichtet ist, dass sie es einem Benutzer ermöglicht, ein Polygon-Patch, basierend auf einem Schwellenwert von Zeitstempelwerten, auszuwählen, und der Prozessor (102) eine Zugfeder zu jedem der Eckpunkte innerhalb des Patch hinzufügt.

**Revendications**

1. Procédé de segmentation d'une structure anatomique, comprenant :

l'initiation (210, 310) d'un algorithme de segmentation qui produit un maillage de surface de la structure anatomique à partir d'une image volumétrique, le maillage de surface étant formé d'une pluralité de polygones comprenant des sommets et des bords ;
l'affectation (230, 330) d'un ressort à chacun des bords et d'un point masse à chacun des sommets du maillage de surface ;
l'affichage (240, 340) d'une vue reformatée en 2D comprenant une vue 2D du maillage de surface et de la structure anatomique ;
la sélection par un utilisateur (250, 355) d'un point sur le maillage de surface,
l'addition (280, 380) de ressorts de traction aux sommets du maillage de surface :

a) en formant (220, 320) un maillage volumétrique directement dans le maillage de surface, le maillage volumétrique comprenant des sommets et des bords correspondant aux sommets et aux bords du maillage de surface ; et en ajoutant un ressort de traction entre un sommet du maillage de surface et un sommet correspondant du maillage volumétrique sur la base de la distance du sommet depuis le point sélectionné ; ou
b) en traçant (350) un contour 2D de la structure anatomique par un utilisateur, le contour 2D comprenant une pluralité de points raccordés l'un à l'autre ; et en ajoutant un ressort de traction d'un point du contour 2D à un sommet du maillage de surface le plus proche du point du contour 2D ;

le déplacement (290, 390) d'une partie du maillage de surface par déplacement par un utilisateur du point sélectionné à un emplacement souhaité, dans lequel la distance sur laquelle chaque sommet au sein de ladite partie se déplacera est déterminée par une distance du sommet depuis le point sélectionné.

2. Procédé selon la revendication 1, lorsque l'on ajoute (280, 380) des ressorts de traction à des sommets du maillage de surface à l'étape a), comprenant en outre :

la réalisation (260, 360) d'un procédé de progression rapide depuis le point sélectionné, la progression rapide affectant une estampille temporelle à chacun des sommets du maillage de surface, l'estampille temporelle étant basée sur une distance depuis le point sélectionné.

3. Procédé selon la revendication 2, lorsque l'on ajoute (280,380) des ressorts de traction à des sommets du maillage de surface à l'étape a), comprenant en outre :

la sélection (270, 370) d'une pastille de polygones sur la base d'un seuil de valeurs d'estampille temporelle.

4. Procédé selon la revendication 3, lorsque l'on ajoute (280, 380) des ressorts de traction à des sommets du maillage de surface à l'étape a), où un ressort de traction est ajouté à chacun des sommets de la pastille et une première extrémité du ressort de traction est fixée au sommet du maillage de surface et une seconde extrémité est fixée à un sommet correspondant du maillage volumétrique.

5. Procédé selon la revendication 4, dans lequel une constante élastique du ressort de traction est pondérée sur la base de la valeur d'estampille temporelle correspondante.

6. Procédé selon la revendication 2, dans lequel le point masse de chacun des sommets est pondéré sur la base de la valeur d'estampille temporelle correspondante ou d'un gradient d'image.

7. Système de segmentation d'une structure anatomique, comprenant :

un processeur (102) initiant un algorithme de segmentation qui produit un maillage de surface de la structure anatomique à partir d'une image volumétrique, le maillage de surface étant formé d'une pluralité de polygones comprenant des sommets et des bords, affectant en outre un ressort à chacun des bords et un point masse à chacun des sommets du maillage de surface ;
un affichage (106) affichant une vue reformatée en 2D comprenant une vue 2D du maillage de surface et de la structure anatomique ; et
une interface utilisateur (104) qui est à même de permettre à un utilisateur de sélectionner un point sur le maillage de surface et d'ajouter des ressorts de traction à des sommets du maillage de surface :

a) en formant (220, 320) un maillage volumétrique directement dans le maillage de surface par le processeur (102), le maillage volumétrique comprenant des sommets et des bords correspondant aux sommets et aux bords du maillage de surface ; et en ajoutant un ressort de traction entre un sommet du maillage de surface et un sommet correspondant du maillage volumétrique sur la base de la distance du sommet depuis le point sélectionné ;
ou
b) en permettant à l'utilisateur de tracer (350) un contour 2D de la structure anatomique, le contour 2D comprenant une pluralité de points raccordés l'un à l'autre ; et en ajoutant un ressort de traction d'un point du contour 2D à un sommet du maillage de surface le plus proche du point du contour 2D ;

dans lequel le processeur (102) est en outre agencé pour déplacer une partie du maillage de surface par déplacement par un utilisateur du point sélectionné à un emplacement souhaité à travers l'interface utilisateur (104), dans lequel la distance sur laquelle chaque sommet au sein de ladite partie se déplacera est déterminée par une distance du sommet depuis le point sélectionné.

8. Système selon la revendication 7, lorsque l'interface utilisateur qui est à même d'ajouter des ressorts de traction à des sommets du maillage de surface sur la base du point sélectionné est effectuée à l'étape a), où le processeur (102) effectue une progression rapide à partir du point sélectionné, la progression rapide affectant une estampille temporelle à chacun des sommets du maillage de surface, l'estampille temporelle étant basée sur une distance depuis le point sélectionné.

9. Système selon la revendication 8, lorsque l'interface utilisateur qui est à même d'ajouter des ressorts de traction à des sommets du maillage de surface sur la base du point sélectionné est réalisée à l'étape a), où l'interface utilisateur (104) est à même de permettre à un utilisateur de sélectionner une pastille de polygones sur la base d'un seuil de valeurs d'estampille temporelle et le processeur (102) ajoute un ressort de traction à chacun des sommets dans la pastille.

104

User Interface

108

102

Processor — Memory

106

Display

Fig. 1

Fig. 2

Fig. 3

400

410

START

Displaying a 2D reformatted view including a 2D view of an anatomical structure being segmented

420

Drawing a 2D contour of the anatomical structure

430

Downsampling the drawn 2D contour

440

Creating a distance map based on a thickness of the downsampled 2D contour

450

Normalizing the 2D contour based on the distance map

460

Moving points within the distance map in a direction of a gradient of the normalization

END

Fig. 4

Fig. 5

**EP 2 415 018 B1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- WO 2005078666 A1

**Non-patent literature cited in the description**

- **YOO-JOO CHOI ; MIN HONG ; MIN-HYUNG CHOI ; MYOUNG-HEE KIM.** ADAPTIVE SURFACE-DEFORMABLE MODEL WITH SHAPE-PRESERING SPRING. *COMPUTER ANIMATION AND VIRTUAL WORD,* vol. 16, 69-83